# EUROPÄISCHE PATENTANMELDUNG

(11) **EP 2 578 120 A1**
(43) Veröffentlichungstag der Anmeldung: **10.04.2013**
(21) Anmeldenummer: 12187267.5
(22) Anmeldetag: 04.10.2012
(51) Int. Cl.: A47J 31/40, A47J 31/42

(54) **Kaffeeautomat und Verfahren zum Einbringen einer Bohnenmenge**

(30) Priorität: 04.10.2011 DE 102011054155
(71) Anmelder: Eugster/Frismag AG, 8580 Amriswil (CH)
(72) Erfinder: Riessbeck, Wolfgang, 8597 Landschlacht (CH); Wäger, Simon, 8580 Amriswil (CH)
(74) Vertreter: Wagner, Kilian

(57) **Zusammenfassung**

Die Erfindung betrifft einen Kaffeeautomat (1) mit einem ersten Bohnenbehälter (2) mit einem ersten Auslass (14) und einem, vom ersten Bohnenbehälter (2) getrennt vorgesehenen zweiten Bohnenbehälter (3) mit einem zweiten Auslass (15), einer zum Mahlen von Bohnen aus dem ersten und dem zweiten Bohnenbehälter (2, 3) ausgebildeten Mahleinheit (6), einer der Mahleinheit nachgeschalteten Brüheinheit (8) für gemahlene Bohnen, mindestens einem Förderschacht (5), durch den Bohnen aus dem ersten und/oder zweiten Bohnenbehälter (2, 3) gravitativ zur Mahleinheit (6) gelangen können, und den Bohnenbehältern (2, 3) zugeordneten Verschlussmitteln (11) zum Verschließen des ersten und zweiten Auslasses (14, 15). Erfindungsgemäß ist vorgesehen, dass den Verschlussmitteln (11) mindestens ein Antrieb (10) insbesondere ein Elektromotor (19), zum automatischen Betätigen derselben zugeordnet ist, der mit Hilfe von Steuermitteln (16) derart ansteuerbar ist, dass die Verschlussmittel (11) bei Erreichen eines vorbestimmten und/oder vorbestimmbaren Bohnenvolumen (23) den ersten und/oder den zweiten Auslass (14, 15) verschließen. Ferner betrifft die Erfindung ein Verfahren zum Einbringen einer Bohnenmenge aus einer Mehrzahl von Bohnenbehältern in eine gemeinsame Mahleinheit.

## Beschreibung

Die vorliegende Erfindung betrifft einen Kaffeeautomaten, auch Kaffeevollautomat genannt, nach dem Oberbegriff des Anspruchs 1. Ferner betrifft die Erfindung ein Verfahren zum Einbringen einer (Kaffee-)Bohnenmenge aus einer Mehrzahl von Bohnenbehältern in eine gemeinsame Mahleinheit, insbesondere ein Verfahren zum Betreiben eines gattungsgemäßen Kaffeeautomaten.

Derartige Kaffeeautomaten, auch folglich als Kaffee-Vollautomaten bezeichnet, sind aus dem Stand der Technik allgemein bekannt und setzen in Bohnenbehältern enthaltene Kaffeebohnen nach Mahl- und Brühschritten durch entsprechend zugeordnete Funktionseinheiten in ein trinkfähiges Kaffeegetränk um. Dabei erfolgt, typischerweise als Reaktion auf eine manuelle Auswahl aus einer Mehrzahl von möglichen Kaffeebohnensorten (aus einer entsprechend zugeordneten Mehrzahl von Bohnenbehältern), die weitere Verarbeitung bis zum trinkfähigen Heißgetränk automatisch, ohne dass eine Bedienperson in diesen Ablauf eingreifen muss.

Die Qualität des trinkbereiten, mit einer solchen Vorrichtung hergestellten Produktes wird dabei nicht nur von der verwendeten Bohnensorte (bzw. von deren Eigenschaften etwa Frische oder dergleichen) bestimmt, auch sind die nachfolgenden Bearbeitungsschritte Mahlen und Brühen kritisch für den Geschmacks- und damit Qualitätseindruck des mit dem gattungsgemäßen Kaffeeautomaten bereiteten Getränks.

So bestimmt etwa die Menge von in das Mahlwerk einer Mahleinheit eingebrachten Kaffeebohnen diesen Geschmackseindruck, so dass im Rahmen des Kaffee-Vollautomaten der Fördervorgang der (noch ungemahlenen) Kaffeebohnen aus einem ausgewählten einer Mehrzahl von Bohnebehältern zum (typischerweise gemeinsamen) Mahlwerk der Mahleinheit ein kritischer, geeignet apparativ einzurichtender Prozess ist.

Aus dem Stand der Technik ist es dabei bekannt, Kaffeebohnenbehälter manuell umschaltbar auszugestalten, wie es etwa in der DE 20 2008 001 749 U1 der Anmelderin beschrieben ist. In hier konstruktiv besonders elegant und kompakt gelöster Weise wird mittels manuell betätigbarer Auswahlmittel zwischen den die jeweils gewünschte Bohnensorte bereitstellenden Behältern ausgewählt und entsprechend einer Auswahlposition der Auswahlmittel erfolgt dann das Freigeben eines betreffenden Auslasses eines gewählten Bohnenbehälters zum Mahlwerk. Dieses wird entsprechend einlassseitig mit den Bohnen gefüllt und in dem Mahlbetrieb angesteuert, so dass ausgangsseitig der Mahleinheit dann brühfähiges Kaffeepulver (der ausgewählten Bohnensorte) zur Verfügung steht.

Eine derartig als gattungsbildend vorausgesetzte Technologie hat sich als robust und großserientauglich bewährt, gleichzeitig gibt es Nachbesserungspotenzial: Als Hauptproblemkomplex entstehen bei dem bisher verwirklichten manuellen Auswahlprozess nachteilige Zwischen- bzw. Todmengen an Kaffeebohnen im Einlassbereich der Mahleinheit bzw. in dem zwischen den Behälterauslässen und der Mahleinheit vorgesehenen Förderschacht beim Umschalten, mit dem Ergebnis, dass die Mahleinheit typischerweise noch einen nicht unerheblichen Rest an Bohnen einer vorab gewählten Sorte vermahlen muss, bevor dann die eigentlich ausgewählten Bohnen (einer anderen Sorte, eines anderen Behälters) nachrutschen. Da zudem die eigentliche Dosierung des Kaffeemehls durch eine geeignete Zeitvorgabe bzw. Zeitsteuerung eines Mahlbetriebs der Mahleinheit erfolgt, ist gerade bei häufig wechselnder Wahl der Bohnenbehälter ein durch die Mahleinheit ausgebrachtes und nachfolgend dann zu verbrühendes Kaffeemehl nicht rein, entsprechend der diesbezüglich ausgewählten Sorte; vielmehr sind teilweise sogar mehrere Brühvorgänge erforderlich bis tatsächlich auch im Hinblick auf das Ausgangsprodukt der Mahleinheit die eingangs vorhandenen Rest- bzw. Todvolumina der Bohnen aufgebraucht sind.

Im Ergebnis zeigen als gattungsbildend vorausgesetzte Kaffeeautomaten also Nachteile bei der Sortentreue des ausgewählten Kaffeemehls, insbesondere bei häufig wechselnden Bohnensorten aus jeweils verschiedenen Bohnenbehältern.

Aufgabe der vorliegenden Erfindung ist es daher, einen Kaffeeautomaten im Hinblick auf eine Reduzierung von nachteiligen Zwischen- bzw. Todmengen an Kaffeebohnen in einem Bereich zwischen Bohnenbehältern und Mahleinheit zu verbessern. Bevorzugt soll eine sortenreine, zumindest jedoch sortenreinere Portionierung von Bohnen in die Mahleinheit erreicht werden. Dabei soll die zu findende Lösung konstruktiv einfach in der Herstellung damit robust im Dauerbetrieb und verschleißarm sein. Ferner sind bevorzugt entstehende Stäube oder dergleichen zu minimieren, so dass zusätzlich die Reinigungsanforderungen an einen solchen verbesserten Kaffeeautomaten herabgesetzt werden können.

Diese Aufgabe wird durch den Kaffeeautomaten mit den Merkmalen des Anspruchs 1 gelöst. Ferner wird die vorliegende Erfindung durch das Verfahren nach dem unabhängigen Anspruch 11 gelöst, wobei dieser Aspekt der Erfindung günstig für den Betrieb des hauptanspruchsgemäßen Kaffeeautomaten, jedoch auch unabhängig von diesem gilt.

Weitere Vorteile, Merkmale und Einzelheiten der Erfindung sind in den Unteransprüchen angegeben. Zur Vermeidung von Wiederholungen sollen vorrichtungsgemäß offenbarte Merkmale auch als verfahrensgemäß offenbart gelten und beanspruchbar sein; ebenso sollen verfahrensgemäß offenbarte Merkmale als vorrichtungsgemäß offenbart gelten und beanspruchbar sein.

Der Erfindung liegt der Gedanke zugrunde, die Verschlussmittel zum Verschließen des ersten Auslasses des ersten Bohnenbehälters und zum Verschließen des zweiten Auslasses des zweiten Bohnenbehälters und ggf. weitere Auslässe von fakultativen weiteren Bohnenbehältern zu automatisieren, um somit die Auslässe automatisiert, d.h. mittels eines Antriebes verschließen zu können. Erfindungsgemäß ist dies dadurch realisiert, dass den Verschlussmitteln mindestens ein Antrieb, vorzugsweise ein einziger Antrieb, bevorzugt ein Elektromotor zugeordnet ist, mit dem die Verschlussmittel automatisch betätigbar sind, wobei dem Antrieb Steuermittel zugeordnet sind, mit denen der Antrieb derart ansteuerbar ist, bevorzugt angesteuert ist, dass die Verschlussmittel nach Dosieren eines vorbestimmten und/oder vorbestimmbaren Bohnenvolumens den mindestens einen, vorzugsweise ausschließlich einen, in einem vorhergehenden Verfahrensschritt zum vollständigen oder teilweise Befüllen des Förderschachts geöffneten Auslass verschließen, so dass (nach Erreichen des vorbestimmten Bohnenvolumens) keine Bohnen mehr in den dem Auslass zugeordneten Förderschacht nachrutschen können. Grundsätzlich ist es möglich, dass jedem Bohnenbehälter oder einer Gruppe von Bohnenbehältern ein eigener Förderschacht zugeordnet ist. Bevorzugt ist jedoch eine Ausführungsform, bei der sämtlichen Bohnenbehältern ein zumindest abschnittsweise, insbesondere in einem Einlaufbereich zu dem gemeinsamen Mahlwerk gemeinsamer Förderschacht zugeordnet ist.

Es wird also durch die erfindungsgemäß automatisierten Verschlussmittel erreicht, dass der Förderschacht, aus dem die Bohnen dann vermahlen werden, nicht wie im Stand der Technik die gesamte Zeit während des Mahlens durch Nachrutschen von Bohnen aus dem diesem zugeordneten, geöffneten Auslass nachgefüllt wird, sondern spätestens während des Mahlens, d.h. vor dem Mahlvorgangsende, vorzugsweise vor Beginn des Mahlvorgangs (also vor Beginn der Entnahme von Bohnen aus dem jeweiligen Förderschacht) oder alternativ nach einer Zeitspanne nach Beginn des Mahlvorgangs geschlossen wird, so dass sichergestellt ist, dass der Förderschacht durch den Mahlprozess zumindest teilweise, bevorzugt, wie später noch erläutert werden wird vollständig, entleert wird, um das nach dem Mahlvorgang im Förderschacht verbleibende Bohnenrestvolumen, vorzugsweise bis auf null, zu reduzieren. Bevorzugt sind die Steuermittel dabei so ausgebildet, dass sie den Antrieb derart ansteuern, dass die Verschlussmittel den jeweils noch offenen Auslass verschließt, bevor der Mahlprozess beginnt, wobei selbstverständlich zumindest der Auslass verschlossen werden muss, der im Falle des Vorsehens mehrerer Förderschächte oder Dosierkammern demjenigen Förderschacht bzw. derjenigen Dosierkammer zugeordnet ist, aus dem/der dann Bohnen vermahlen werden.

Unter einem Verschließen eines Auslasses wird dabei verstanden, dass durch das Verschließen ein Nachrutschen von Bohnen in den Förderschacht verhindert wird. Hierzu ist es aufgrund des Schütt- bzw. Rieselverhaltens von Kaffeebohnen nicht zwingend erforderlich (jedoch durchaus bei Bedarf realisierbar) die Auslässe vollständig abzudichten bzw. den gesamten Auslassquerschnitt zu versperren - es kann ausreichend sein, den Auslassquerschnitt nur teilweise zu verdecken bzw. zu sperren, um das unerwünschte Nachrutschen bzw. Herausfallen zu verhindern, insbesondere dann wenn die Auslässe in einem Seitenwandbereich (alternativ im Bodenbereich) des jeweiligen Bohnenbehälters vorgesehen sind.

Vorbestimmt werden kann das zu dosierende Bohnenvolumen beispielsweise durch eine entsprechende Zeitansteuerung des den Verschlussmitteln zugeordneten Antriebs, also derart, dass dieser die Verschlussmittel so ansteuert, dass diese den zum Förderschacht (noch) offenen Auslass nach Ablauf einer vorgegebenen und/oder vorgebbaren, vorzugsweise bohnensortenspezifischen, Zeitspanne und/oder nach Erreichen einer vorgegebenen oder vorgebbaren Mahlwerkumdrehungszahl bzw. Mahlwerkmotorumdrehungszahl verschließen. Auch ist es möglich, dass das Erreichen des zu dosierenden vorbestimmten oder vorbestimmbaren Bohnenvolumens, beispielsweise mittels eines optischen Sensors oder eines mechanischen Sensors, beispielsweise eines Drucksensors, detektiert wird. Bevorzugt wird das Bohnendosiervolumen von dem befüllbaren Förderschachtvolumen oder von der später noch erläuterten, variablen Dosierkammergröße bzw. von einem ebenfalls noch im Folgenden erläuterten, einstellbaren Dosierkammervolumen bestimmt, wobei in diesem Fall nur sichergestellt werden muss, dass die Verschlussmittel den jeweiligen (oder gegebenenfalls mehrere) Bohnenbehälter so lange geöffnet halten, bis der Förderschacht oder die Dosierkammer mit Bohnen vollgefüllt ist. In diesem Fall entspricht das Förderschachtsvolumen oder das Dosierkammervolumen dem zu dosierenden Bohnenvolumen. Im einfachsten Fall wird das zu dosierende Bohnenvolumen durch die Auslegung eines fixen Förderschachtvolumens bestimmt oder durch einen veränderlichen befüllbaren Volumenteil des ggf. noch mit einer Restmenge eines vorhergehenden Mahlschritts gefüllten Förderschachtes.

Wie eingangs erwähnt ist es besonders vorteilhaft, wenn kein Bohnenrestvolumen nach dem Mahlvorgang im Förderschacht verbleibt. Die kann beispielsweise dadurch realisiert werden, dass das zu füllende Förderschachtvolumen vergleichsweise klein gewählt wird, bevorzugt so groß, dass es eine Mindestmenge an Bohnenaufnehmen kann, die gemahlen werden muss, um einen geschmackvollen Kaffee mit der Brüheinheit herstellen zu können, oder die, wenn zu Kaffeemehl gemahlen, eine Mindestfüllmenge für eine Brühkammer darstellt. Insbesondere dann, wenn das Förderschachtvolumen also so klein bemessen wird, kann das zu dosierende Bohnenvolumen, insbesondere für einen schwachen Kaffee dem Förderschachtvolumen entsprechen. Möchte der Benutzer einen (etwas) stärkeren Kaffee kann durch eine entsprechende Ansteuerung des Antriebs der Verschlussmittel während des Mahlvorgangs nachdosiert werden. In diesem Fall entspricht das zu dosierende Bohnenvolumen also dem maximal befüllbaren Förderschachtvolumen zuzüglich dem nachdosierten Bohnenvolumen, welchen während des Mahlvorgangs durch eine entsprechende Ansteuerung des Antriebs der Verschlussmittel nachdosiert wird. Die Nachdosiermenge kann dabei über die zusätzliche Öffnungszeit und/oder den zusätzlichen Öffnungsquerschnitt der Verschlussmittel eingestellt werden, wobei diese veränderlichen bzw. einstellbaren Parameter wiederum abhängig sind von dem (bekannten) mit dem Mahlwerk zu vermahlenden (Mahl-)Bohnenvolumen pro Zeiteinheit. Wird von einem Benutzer also beispielsweise ein Kaffee angewählt, der 3g mehr Kaffeemehl benötig als die Mindestmenge (die bevorzugt dem Förderschachtvolumen entspricht) und ist bekannt, dass das Mahlwerk zum Mahlen dieser Menge eine Zeit x und/oder y Umdrehungen benötigt, so wird der Antrieb der Verschlussmittel über die Steuermittel so eingestellt werden, dass diese mindestens einen der Auslässe so lange geöffnet halten oder so lange wieder öffnen, bis dass die Zeit x erreicht und/oder die Umdrehungen y vollzogen sind. Bevorzugt ist es in diesem Zusammenhang, wenn die zu mahlende Bohnenmenge nicht wie im Stand der Technik durch eine zeit- oder umdrehungszahlabhängige Ansteuerung des Mahlwerkmotors erfolgt, sondern dass der Mahlwerksmotor mindestens so lange betrieben wird, bis dass sicher der Förderschacht oberhalb des Mahlwerkeingangs vollständig geleert ist, was beispielsweise über einen abfallenden Ankerstrom detektiert werden kann.

In der Praxis besteht das Problem, dass unterschiedliche Bohnensorten, insbesondere aufgrund einer unterschiedlichen Größe und/oder eines unterschiedlichen Röstgrades eine unterschiedliche Schüttdichte aufweisen, d.h. dass ein durch Mahlen eines bestimmten Bohnenvolumens erhaltbares Kaffeemehlgewicht bohnensortenabhängig ist. Dies führt dazu, dass die Kaffeestärke in Abhängigkeit der Bohnensorte start schwanken kann. Um die zu vermahlende Bohnenmenge zum erzielen eines möglichst gleichbleibenden Kaffeemehlgewichtes anpassen zu können, wird in Weiterbildung der Erfindung vorgeschlagen, die Steuermittel zum Ansteuern des mindestens einen Antriebs als Korrekturmittel auszubilden, die die zu dosierende Bohnenmenge (für eine bestimmte Kaffeestärkenauswahl durch einen Benutzer) anpassen, um eine (für die Auswahl) möglichst gleichbleibende Mehlmenge (Mehlgewicht) zu erhalten. Hierzu wird das tatsächlich gemahlene Kaffeemehlgewicht und/oder das Kaffeemehlvolumen, beispielsweise durch eine Höhenmessung mittels eines Tasters in der Brüheinheit bei bekannter Querschnittsfläche gemessen und der Messwert wird von den Steuermitteln mit einem hinterlegten, vorzugsweise veränderbaren, Sollwert verglichen. Ist der Istwert zu niedrig, wird der Antrieb bei einer nachfolgenden Dosierung so angesteuert, dass ein größeres Bohnenvolumen dosiert wird, beispielsweise in dem die Zeitspanne zur Nachdosierung verlängert wird-d.h. ein Verschlusselement, insbesondere ein Schieber wird später geschlossen. Ist der Istwert zu groß, wird entsprechend das zu dosierende Bohnenvolumen verringert, beispielsweise indem ein Verschlusselement schneller verschlossen wird bzw. weniger lange geöffnet bleibt.

Ganz besonders bevorzugt ist es also, wenn das Bohnenvolumen, wie später noch erläutert werden wird, veränderlich ist, wobei es noch weiter bevorzugt ist, wenn das Bohnenvolumen jeweils das maximale, bevorzugt veränderliche, Volumen ist, welches im Förderschacht bzw. dem weiterbildungsgemäß dann als Dosierkammer mit veränderlichem Volumen ausgebildeten Förderschacht aufgenommen werden kann. Im letztgenannten Fall wird das Bohnenvolumen also bei voll gefülltem Schacht bzw. bei voll gefüllter Dosierkammer erreicht, wobei es wie zuvor erläutert auch möglich ist, dass das Bohnenvolumen einem Teilvolumen des maximal möglichen Volumens entspricht, insbesondere dann, wenn die Verschlussmittel zeitgesteuert werden oder durch geeignete Detektionsmittel das Erreichen eines gewünschten Bohnenvolumens erkannt wird.

Für den Fall, dass gezielt eine Mischung der Bohnen aus den unterschiedlichen Bohnenbehältern herbeigeführt werden soll, so kann das Mischungsverhältnis zur eine entsprechende Ansteuerung des mindestens einen Antriebs der Verschlussmittel eingestellt werden, um somit das Verhältnis der Öffnungszeiten und/oder Öffnungsquerschnitte der Auslässe einstellen zu können. Besonders bevorzugt kann ein Mischen dadurch erfolgen, dass ein zuvor erläutertes nachzudosierendes Bohnenvolumen aus einem bestimmten Bohnenbehälter erfolgt, insbesondere aus einem nicht zum vorhergehenden Befüllen des Förderschachtes herangezogenen Bohnenbehälters. Auch ist es möglich, dass das Nachdosieren und/oder das vorhergehenden Befüllen des Förderschachtes aus unterschiedlichen Bohnenbehältern (gleichzeitig oder nacheinander) zu realisieren.

Im einfachsten Fall muss das Bohnenvolumen nicht dem Mahlvolumen entsprechen, d.h. es muss nicht zwingend sichergestellt werden, dass das gesamte Bohnenvolumen, welches nach Verschließen der Auslässe im Förderschacht vorhanden ist, gemahlen wird. Selbst bei dieser einfachen Ausführungsvariante, bei welcher die Mahleinheit, wie im Stand der Technik bekannt, zeitgesteuert oder umdrehungszahlgesteuert wird, kann bereits durch die vorgeschlagene Automatisierung der Verschlussmittel ein erheblicher Vorteil erreicht werden, da das nach dem Mahlen im Förderschacht verbleibende Volumen in jedem Fall geringer ist als im Stand der Technik, wo Bohnen auch während des Mahlens bis zu dessen Abschluss nachrutschen, wo also der Förderschacht dauerhaft vollgefüllt ist. Bevorzugt ist eine Ausführungsform, bei welcher das gesamte im Förderschacht befindliche Bohnenvolumen (ggf. fakultativ zuzüglich eines möglicherweise nachdosierten Bohnenvolumens) vermahlen wird, was beispielsweise dadurch sichergestellt werden kann, dass die Mahleinheit über eine Zeitspanne betrieben wird, nach deren Verstreichen erfahrungsgemäß sichergestellt ist, dass sämtliche Bohnen vermahlen sind. Bevorzugt wird jedoch ein Mahlwerk-Motorparameter als Indikator für das vollständige Vermahlen überwacht, beispielsweise kann ein abfallender Motorstrom signalisieren, dass das gesamte Bohnenvolumen vermahlen ist.

Ganz besonders bevorzugt ist es, wenn den Verschlussmitteln zum Verschließen des ersten und zweiten Auslasses ein gemeinsamer Antrieb, insbesondere ein gemeinsamer Elektromotor zugeordnet ist, mit dem entsprechende Verschlusselemente, insbesondere Verschlussschieber betätigbar sind, vorzugsweise wechselseitig, derart, dass wenn einer der Auslässe geöffnet ist automatisch der weitere Auslass geschlossen ist und bevorzugt derart, dass beide Auslässe in einer bestimmten Verstellposition verschlossen sind.

Dies kann beispielsweise dadurch realisiert werden, dass dem aus der DE 20 2008 001 749 U1 bekannten Mechanismus eine Elektromotor zugeordnet ist, insbesondere anstelle des von Hand betätigbaren Umschalters.

Wie bereits angedeutet, ist es, insbesondere um ein vollständiges Vermahlen eines Bohnenvolumens zu ermöglichen bzw. um das Bohnenvolumen genau auf die gewünschte Kaffeestärke abzustimmen vorteilhaft, in dem mindestens einen Förderschacht mindestens eine volumenveränderliche Dosierkammer zur Aufnahme des Bohnenvolumens auszubilden, also mit dem Förderschacht, vorzugsweise umfänglich eine Dosierkammer zu begrenzen, deren Aufnahmevolumen, bevorzugt automatisiert, veränderlich ist, um dadurch das Bohnenvolumen (dann ein Bohnen-Dosiervolumen) einstellen zu können. In der Praxis geschieht dies in Weiterbildung der Erfindung durch eine Veränderung einer Eintragsposition eines, vorzugsweise automatisiert bewegbaren Wandabschnittes, bevorzugt eines Bodenabschnittes der mindestens einen Dosierkammer relativ zu einem (zugehörigen) Auslass eines Bohnenbehälters, wobei durch diese Positionierung sich dann, weiter beeinflusst durch Eigenschaften der einzutragenden Bohnen (wie etwa ein jeweiliges Schüttverhalten) das jeweilige Bohnen-Dosiervolumen ergibt. Bei der zuvor erläuterten Ausgestaltung ist ein Nachdosieren durch ein geöffnet lassen der Verschlussmittel oder ein wieder öffnen der Verschlussmittel während des Mahlvorgangs nicht mehr erforderlich, bei Bedarf jedoch trotzdem realisierbar.

Damit ist zunächst vorteilhaft und in Weiterbildung der Erfindung sichergestellt, dass durch den (einfach steuer- und damit automatisierbaren) Bewegungshub des Wandabschnittes der bevorzugt ansonsten stationären Dosierkammer dieses Bohnen-Dosiervolumen (Bohnenvolumen) vor- und einstellbar ist, etwa im Hinblick auf eine jeweilige optimale Bohnenmenge einer ausgewählten Kaffeesorte und/oder eine gewünschte Geschmacksstärke eines betreffenden Kaffees. Vorteilhaft gestaltet ist die Erfindung in Ihrer Weiterbildung damit, dass nun diese durch die Position (Eintragsposition) des bewegbaren Wandabschnittes vorbestimmte Bohnenmenge als solches, vorzugsweise ausschließlich, gravitativ zur Mahleinheit gelangt und vollständig und restlos vermahlen werden kann. Damit liegt dann auch am Ausgang der Mahleinheit ein sortenreines Kaffeemehlprodukt vor. Zusätzlich ergibt sich vorteilhaft, dass durch die feststehende (variable) der Mahleinheit zugeführte Bohnenmenge eine aufwändige, prozesstechnisch nur schwierig beherrschbare Steuerung etwa einer Dauer des Vermahlens zur Dosierung einer Menge gewünschten Kaffeemehls entfällt; diese Menge ist durch das Bohnen-Dosiervolumen vorgegeben und die Mahleinheit muss lediglich (prozesstechnisch wesentlich einfacher im Betrieb und in der Ansteuerung) so lange betrieben werden, bis diese Charge vollständig vermahlen ist.

Im Ergebnis gestattet, insbesondere die zuvor erläuterte vorteilhafte Weiterbildung der Erfindung damit in überraschend einfacher und kontrollierbarer Weise das Bereitstellen und Verarbeiten sortenreiner Kaffeebohnen (als Grundlage für ein nachfolgendes Vermahlen) bzw. entsprechend sortenreinen Kaffeemehls am Ausgang der Mahleinheit, wobei zusätzlich vorteilhaft die aus dem Stand der Technik beschriebenen Zwischen- bzw. Todvolumina vermieden werden können.

Praktisch besonders bedeutsam ist die vorliegende Erfindung im Zusammenhang mit der unmittelbaren Portionierung von Kaffee zur trinkfertigen Volumina, etwa zur unmittelbaren Bereitung einer Tasse oder einer Doppeltasse des gewünschten Kaffees, wobei erfindungsgemäß besonders günstige Bohnenmengen im Bereich zwischen 4g und 40g, insbesondere dann zwischen 7g und 20g, zur Zubereitung derartiger Kaffeeportionen weiterbildungsgemäß günstig verarbeitet werden können.

Das Ergebnis selbst der einfachsten Ausführungsvariante ohne einstellbares Dosiervolumen ist bereits eine deutlich erhöhte Prozess- und Geschmacksqualität resultierenden gebrühten Kaffees, insbesondere Geschmacksvariationen im Übergangsbereich zwischen zwei aufeinander folgend ausgewählten Bohnentypen können wirksam vermindert, vorzugsweise sogar verhindert werden (oder bewusst in einem vorgegeben, vorzugsweise einstellbaren Mischungsverhältnis herbeigeführt werden) und die beschriebene Weiterbildung der Erfindung ermöglicht zusätzlich, durch die Chargenweise, in sich geschlossen und portionsweise dimensionierte Bestimmung des Bohnen-Dosiervolumens eine verbesserte Automatisierbarkeit und Prozesssteuerung.

Damit nimmt die vorteilhafte Ausgestaltung der Erfindung bewusst den scheinbaren Nachteil in Kauf, dass vor Beginn des Vermahlens zunächst Bewegungsvorgänge zur Einstellung der Eintragsposition und damit zur Portionierung erfolgen müssen, insoweit die mögliche Prozesszeit verlängern. Gleichzeitig ermöglicht es die Weiterbildung der Erfindung durch größere Flexibilität und Kontrollierbarkeit des Prozesses an den verschiednen beteiligten Einheiten einer Optimierung des Gesamtergebnisses.

Bevorzugt sind der mindestens einen, abschnittsweise von dem Förderschacht gebildeten Dosierkammer Austragsmittel zum Entleeren der Dosierkammer und damit des vorbestimmten Bohnenvolumens zugeordnet, wobei es ganz besonders bevorzugt ist, wenn diese Austragsmittel motorisch angetrieben sind. Noch weiter bevorzugt sind die Austragsmittel von dem in unterschiedliche Eintragspositionen verstellbaren Wandabschnitt gebildet, beispielsweise indem dieser Wandabschnitt, zumindest abschnittsweise als Klapp- oder Schiebetür ausgeführt ist. Auf diese Weise können zum Austragen der Dosierkammer Schwerkrafteffekte genutzt werden, also etwa ein Fallen nach unten (Schütten) und/oder Gleiten entlang einer bevorzugt schiefen Ebene o.dgl. nutzt. Hierdurch folgt also nicht nur das Eintragen des Bohnen-Dosiervolumens in die mindestens eine Dosierkammer gravitativ, d.h. unter Ausnutzung der Schwerkraft, sondern auch das Austragen des dosierten Volumens, wodurch sich die Vorrichtung insgesamt in äußerst kompakter und damit nutzerfreundlicher Weise realisieren lässt. Darüber hinaus kann sichergestellt werden, dass motorisch anzutreibende Teile minimiert und zusätzlich Residuen des Transportprozesses, etwa Stäube o.dgl. der Kaffeebohnen, stets abwärts in Richtung auf die Mahleinheit und diese hineingeleitet werden, wodurch Verschmutzungen der Vorrichtung in ihrem Inneren außerhalb der Förderstrecke minimiert werden, was praktisch bedeutsam ist, da der Reinigungs- und Wartungsaufwand minimiert wird.

Grundsätzlich ist es möglich, dass dem ersten und zweiten Bohnenbehälter eine gemeinsame Dosierkammer zugeordnet ist, in die die beiden (oder im Falle von zusätzlichen Bohnenbehältern weitere) Auslässe münden. Bevorzugt ist jedoch jedem Bohnenbehälter eine eigene Dosierkammer mit eigenen Austragsmitteln zugeordnet, wobei es auch denkbar ist, mehreren Dosierkammern gemeinsame Austragsmittel zuzuordnen.

Auch realisierbar ist eine Ausführungsvariante bei der der bewegliche, durch die variable Einbringposition das Dosierkammervolumen bestimmende Wandabschnitt von den dann, vorzugsweise höhenverstellbaren, Verschlussmitteln gebildet ist. Mit anderen Worten wird das Dosierkammervolumen dann von den zusätzlich zu ihrem Verschlussmechanismus bzw. Verschlussbewegungen verstellbaren Verschlussmitteln bestimmt, die, vorzugsweise vor dem Öffnungsvorgang, in eine von mehreren Eintragspositionen verstellt werden können, die dann das vorzugsweise unterhalb von diesen befindliche Dosierkammervolumen bestimmt. In diesem Fall kann auf von den Verschlussmitteln separate Austragsmittel zum Entleeren der mindestens einen Dosierkammer verzichtet werden. Bei der zuvor erläuterten Ausführung wird dann das Dosierkammervolumen nicht zwischen (ortsfesten) Verschlussmitteln und dem davon beabstandeten, bewegbaren Wandabschnitt begrenzt, sondern von den beweglichen Wandabschnitt bildenden Verschlussmitteln und einen Einlassbereich der Mahleinheit.

Konstruktiv besonders vorteilhaft ist es, wenn die unterschiedlichen Eintragspositionen, in denen der bewegbare Wandabschnitt der Dosierkammer verstellbar ist, entlang der Förderschachthochachse angeordnet sind - mit anderen Worten kann dann also der Wandabschnitt innerhalb des Förderschachtes in einer Hochrichtung verstellt werden, um somit das maximale Dosierkammervolumen, welches bevorzugt dem Bohnenvolumen (Dosiervolumen) entspricht, einstellen zu können.

Gleichzeitig kann durch die hieraus resultierende geometrische Anordnung der Dosierkammer oberhalb der Mahleinheit sichergestellt werden, dass auch Stäube und dgl. zur Mahleinheit sichergestellt werden, dass auch Stäube und dgl. zur Mahleinheit geführt werden und nicht unbeabsichtigt und verschmutzungsträchtig austreten.

Ganz besonders zweckmäßig ist es, wenn die Eintragspositionen manuell und/oder automatisch auswählbar ist, manuell beispielsweise durch Betätigen einer entsprechenden Eingabemöglichkeit, insbesondere in einer elektronischen Menüführung. Automatisch auswählbar kann die Eintragsposition sein, wenn Mittel zur automatischen Erkennung einer Kaffeesorte vorgesehen sind. Ganz besonders bevorzugt ist es, wenn die Eintragspositionen manuell und/oder automatisch unterschiedlich für Füllgut des ersten und zweiten Bohnenbehälters sind, insbesondere angepasst an die jeweilige Kaffeesorte.

Die dem Förderschacht nachgeordnete Mahleinheit erhält im Falle der Ausbildung des Förderschachtes als mindestens eine volumenveränderliche Dosierkammer eine definierte bzw. begrenzte Charge an Kaffeebohnen, vorteilhaft sortenrein (oder bewusst in einem eingestellten Mischungsverhältnis gemischt) und ohne mit Restvolumina vermengt zu sein. Entsprechend ist es weiterbildungsgemäß vorteilhaft vorgesehen, die Mahleinheit so anzusteuern, dass die zugeführte Bohnenmenge vollständig vermahlen wird, wobei insbesondere eine im Stand der Technik notwendige Feinsteuerung (etwa bezogen auf eine genaue Mahldauer), eine Anzahl von Messer-Umdrehungen o.dgl. unnötig wird, mithin der Steuerungsaufwand deutlich vermindert ist. So ist es in konstruktiv-praktischer Realisierung etwa bevorzugt, das vollständige Vermahlen der zugeführten Charge durch beobachten des Motorstroms des Mahlwerk-Motors als Parameter vorzusehen; ein Abfallen des Motorstroms würde (nach dem Vermahlen der letzten Kaffeebohne) das vollständige Vermahlen und damit Entleeren des Mahlwerks signalisieren und etwa zum deaktivieren des Mahlwerks führen können. Jedoch kann im einfachsten Fall auch ein zeitgesteuertes oder umdrehungsgesteuertes Mahlwerk eingesetzt werden, bei dem die Mahlzeit bzw. die Umdrehungszahlen die gemahlene Kaffeeportion vorgibt. Da aufgrund des automatisierten Verschließens der Auslässe ein Nachrutschen von Kaffee verhindert wird, wird auch bei einer solchen Ausführung das Ergebnis insgesamt dadurch verbessert, dass das im Förderschacht verbleibende Restvolumen geringer ist und somit bevorzugt spätestens nach zwei Mahlvorgängen eine Sortenreinheit gegeben ist.

Die Erfindung führt auch auf ein Verfahren mit den Merkmalen des Anspruchs 15.

In Weiterbildung des Verfahrens ist mit Vorteil vorgesehen, dass das vorbestimmte Bohnenvolumen detektiert wird oder dadurch vorbestimmt wird, dass der erste und/oder zweite Auslass nach Ablauf einer vorgegebenen und/oder vorgebbaren Zeitspanne verschlossen werden/wird. In Weiterbildung des Verfahrens ist mit Vorteil vorgesehen, dass der mindestens eine Antrieb derart angesteuert wird, dass der erste und/oder der zweite Auslass, insbesondere nach vollständigem Auffüllen des Förderschachtes, nach Beginn des Mahlvorgangs, insbesondere während des Mahlvorgangs, für eine, vorzugsweise vorbestimmte oder vorbestimmbare, Zeitspanne geöffnet bleiben/bleibt oder wieder geöffnet werden/wird, um ein vorbestimmtes und/oder vorbestimmbares Bohnenvolumen zum Erreichen des zu dosierenden Bohnenvolumens nachzudosieren. In Weiterbildung des Verfahrens ist mit Vorteil vorgesehen, dass die Steuermittel die Zeitspanne in Abhängigkeit der von einem Benutzer ausgewählten Kaffeestärke einstellen. In Weiterbildung des Verfahrens ist mit Vorteil vorgesehen, dass zum Beenden des Nachdosierens der erste und/oder zweite Auslass nach Ablauf einer vorgegebenen und/oder vorgebbaren Mahldauer des Mahlwerks und/oder nach Erreichen einer vorgegeben und/oder vorgebbaren Anzahl an Mahlwerks- oder Mahlwerksmotorumdrehungen geschlossen werden/wird. In Weiterbildung des Verfahrens ist mit Vorteil vorgesehen, dass ein Ist-Volumen und/oder ein Ist-Gewicht des mittels der Mahleinheit gemahlenen Kaffeemehls, insbesondere einer Brühkammerfüllmenge, bestimmt werden/wird der Antrieb in Abhängigkeit eines Vergleichs des Ist-Volumens und/oder des Ist-Gewichtes mit einem, vorzugsweise einstellbaren, Soll-Volumen und/oder Soll-Gewichtes angesteuert wird, derart, dass bei einem nachfolgenden Dosiervorgang die Differenz zwischen Istwert und Sollwert verringert wird, insbesondere durch Anpassen der Öffnungszeit, insbesondere der Nachdosierzeitspanne. In Weiterbildung des Verfahrens ist mit Vorteil vorgesehen, dass der erste und/oder zweite Auslass verschlossen werden/wird, nachdem, vorzugsweise sobald, der Förderschacht, insbesondere eine von dieser begrenzte Dosierkammer maximal gefüllt oder teilgefüllt ist. In Weiterbildung des Verfahrens ist mit Vorteil vorgesehen, dass das, vorzugsweise maximale, Bohnenvolumen vorgegeben und/oder eingestellt wird durch, vorzugsweise elektromotorisch angetriebenes Bewegen eines Wandabschnittes einer von dem Wandabschnitt begrenzten Dosierkammer. In Weiterbildung des Verfahrens ist mit Vorteil vorgesehen, dass die Dosierkammer zur Mahleinheit entleert wird durch Öffnen von, vorzugsweise von dem Wandabschnitt gebildeten, Austragsmitteln. In Weiterbildung des Verfahrens ist mit Vorteil vorgesehen, dass der erste und/oder zweite Auslass verschlossen werden/wird, bevor der Mahlvorgang gestartet wird, oder nach Ablauf einer vorbestimmten Zeitspanne nach Start des Mahlvorgangs, insbesondere vor Beendigung des Mahlvorgangs. In Weiterbildung des Verfahrens ist mit Vorteil vorgesehen, dass die Austragsmittel geschlossen werden, bevor der zugehörige Auslass geöffnet wird und/oder dass die Austragsmittel vor Beendigung des Mahlvorgangs geschlossen werden.

Weitere Vorteile, Merkmale und Einzelheiten der Erfindung ergeben sich aus der nachfolgenden Beschreibung bevorzugter Ausführungsbeispiels sowie anhand der Zeichnungen.

Diese zeigen in:
- Fig. 1: eine stark schematisierte Darstellung eines Kaffeeautomaten, umfassend zwei Bohnenbehälter, denen sowohl Verschluss- als auch Austragsmittel zugeordnet sind,
- Fig. 2 bis Fig. 8: einen Ausschnitt des Kaffeeautomaten gemäß Fig. 1 in unterschiedlichen Betriebszuständen während des Verfahrens zum Einbringen einer Bohnenmenge aus einer Mehrzahl von Bohnenbehältern in eine gemeinsame Mahleinheit,
- Fig. 9: eine alternative Ausführungsform eines Kaffeeautoamten mit einer gemeinsamen Dosierkammer für zwei Bohnenbehälter,
- Fig. 10: ein weiteres Ausführungsbeispiel ohne verstellbare Wandabschnitte und folglich ohne variable Dosierkammer, und
- Fig. 11: eine weitere alternative Ausführungsform mit höhenverstellbaren Verschlussmitteln, mit dem das Dosierkammervolumen veränderbar ist.

In den Figuren sind gleiche Elemente und Elemente mit der gleichen Funktion mit den gleichen Bezugszeichen gekennzeichnet.

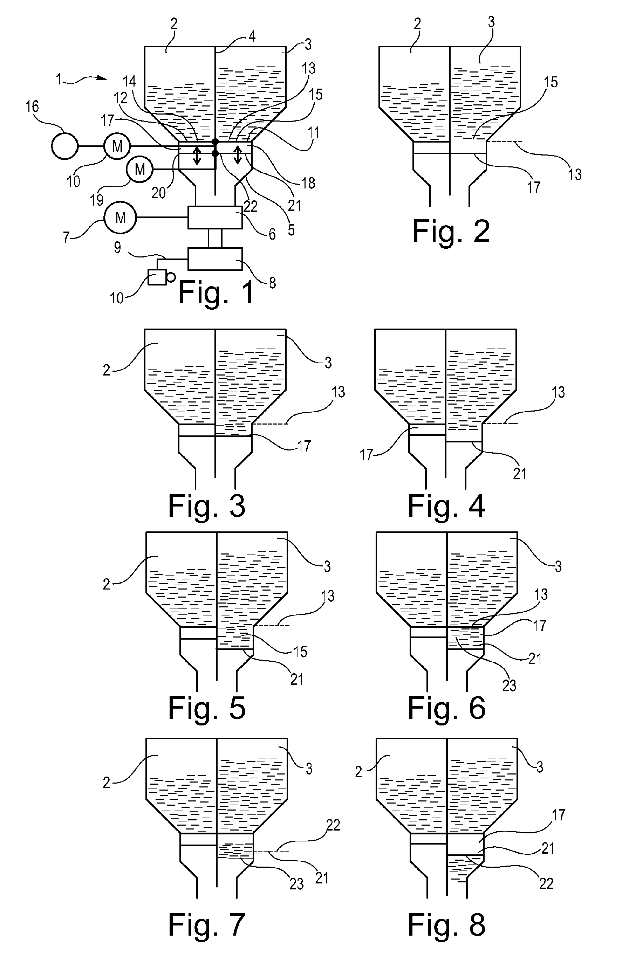

In Fig. 1 ist stark schematisiert ein Kaffee(voll-)automat gezeigt. Dieser umfasst zwei Bohnenbehälter, nämlich einen ersten Bohnenbehälter 2, gefüllt mit einer ersten Kaffeesorte und einen zweiten Bohnenbehälter 3, gefüllt mit einer zweiten Bohnensorte. Die beiden Bohnenbehälter 2, 3 sind voneinander über eine gemeinsame Trennwand 4 getrennt.

Unterhalb der Bohnenbehälter 2, 3 befindet sich ein abschnittsweise gemeinsamer Förderschacht 5, durch welchen Kaffeebohnen ausschließlich gravitativ einer gemeinsamen Mahleinheit 6 zugeführt werden können, die Mittels eines Mahlwerkmotors 7 betätigbar ist. Der Austrag der Mahleinheit 6, also eine gemahlene Kaffeeportion wird in an sich bekannter Weise einer Brüheinheit 8 zugeführt, die das gemahlene Kaffeeprodukt unter Zuhilfenahme von unter Druck stehendem Heißwasser zu einem Kaffeegetränk zubereitet, welches über einen Auslass 9 einem Trinkbehältnis 10 zugeführt werden kann.

Wie aus Fig. 1 zu entnehmen ist, sind den Bohnenbehältern 2, 3 mittels eines elektromotorischen Antriebs 10 automatisiert betätigbare Verschlussmittel 11 zugeordnet, wobei die Verschlussmittel 11 in dem gezeigten Ausführungsbeispiel ein erstes, dem ersten Bohnenbehälter 2 zugeordnetes Verschlusselement 12 und ein zweites, dem zweiten Bohnenbehälter 3 zugeordnetes Verschlusselement 13 umfassen, die gemeinsam, beispielsweise mit der in der DE 20 2008 001 749 U1 offenbarten Mechanik bewegungstechnisch gekoppelt betätigbar sind und zwar zwischen einer gemeinsamen Verschlussposition in der beide Bohnenbehälter 2, 3 genauer ein erster und ein zweiter Auslass 14, 15 verschlossen sind und einer ersten Öffnungsposition, in welcher der erste Auslass geöffnet und der zweite verschlossen ist und einer zweiten Öffnungsposition in der der erste Auslass verschlossen und der zweite geöffnet ist.

Alternativ ist es denkbar, jedem Verschlusselement 12, 13 einen separaten Antrieb zuzuordnen.

Dem Antrieb 10 sind Steuermittel 16 zugeordnet, die den Antrieb 10 nach Dosieren eines vorbestimmten und/oder vorbestimmbaren Bohnenvolumens ansteuern, damit dieser die Verschlussmittel 11 derart verstellt, dass dann beide Auslässe 14, 15 verschlossen sind (hierzu muss lediglich der noch offene Auslass geschlossen werden). Dabei können die Steuermittel den Antrieb 10 beispielsweise in Abhängigkeit eines Zeitsignals, d.h. nach Verstreichen einer vorbestimmten und/oder vorbestimmbaren Zeitspanne ansteuern und/oder auf Basis eines Detektionssignals eines Sensors, der das Erreichen des gewünschten Bohnenvolumens beispielsweise optisch oder mittels eines Drucksensors detektiert.

Unterhalb jedes Verschlusselementes 12, 13 befindet sich eine Dosierkammer 17, 18 also eine erste Dosierkammer 17 und eine zweite Dosierkammer 18, deren Volumen und damit das Bohnenvolumen veränderbar ist. Veränderbar ist das Volumen der jeweiligen Dosierkammer 17, 18 durch, hier elektromotorisches Verstellen von jeweils einem Wandabschnitt, also einem ersten Wandabschnitt 20 und einem zweiten Wandabschnitt 21, wobei die beiden Wandabschnitte 20, 21 Austragsmittel 22 zum Entleeren des jeweiligen Dosierkammervolumens bilden.

Die Wandabschnitte 20, 21 sind, in dem gezeigten Ausführungsbeispiel unabhängig voneinander (alternativ gemeinsam und/oder in einer mechanisch gekoppelten Bewegung) zwischen mehreren entlang der Hochachse des Förderschachtes 5 angeordneten Eintragspositionen verstellbar, wobei die Eintragsposition das maximal in der zugehörigen Dosierkammer 17, 18 aufnehmbare Bohnenvolumen (Bohnendosiervolumen) vorgibt.

Es wird also zunächst, in Abhängigkeit einer entsprechenden Vorgabe durch den Benutzer oder automatisch programmgesteuert, insbesondere nach Erkennung einer Bohnensorte, ein Wandabschnitt mittels des Elektromotors 19 verstellt und somit das Bohnenvolumen der zugehörigen Dosierkammer vorgegeben. Alternativ erfolgt die Vorgabe des Dosierkammervolumens erst nach Öffnen des entsprechenden Auslasses wie in der konkreten Ausführungsform im Folgenden noch anhand von Fig. 4 erläutert werden wird.

Jedenfalls wird vor oder nach dem Verstellen des jeweiligen Wandabschnittes 20, 21 der gewünschte Auslass, in dem konkreten Ausführungsbeispiel, wie aus Fig. 2 zu ersehen, der zweite Auslass 15 durch eine entsprechende Betätigung der Verschlussmittel 11 mit Hilfe des Antriebs 10 geöffnet, so dass die Kaffeebohnen aus dem zweiten Bohnenbehälter 3 in die zweite Dosierkammer 17, hier ausschließlich gravitativ nachrutschen können, so dass die zweite Dosierkammer 17, wie aus Fig. 3 zu erkennen ist, gefüllt wird. In dem gezeigten Ausführungsbeispiel wird daraufhin der zweite Wandabschnitt 21 mit Hilfe des Elektromotors 19 entlang der Hochachse des Förderschachtes 5 verstellt, in dem gezeigten Ausführungsbeispiel derart, dass das Dosierkammervolumen im Vergleich zum Dosierkammervolumen der ersten Dosierkammer 17 vergrößert wird.

Da die Verschlussmittel 11 den zweiten Auslass 15 noch geöffnet halten, können Bohnen aus dem zweiten Bohnenbehälter 3 nachrutschen und somit das (nun vergrößerte) Dosierkammervolumen bzw. Bohnenvolumen vollständig auffüllen. Nachdem das durch das Dosierkammervolumen vorbestimmte Bohnenvolumen (in Fig. 5 ersichtlich) durch Nachrutschen von Bohnen aufgefüllt wurde, werden die Verschlussmittel 11, genauer, das zweite Verschlusselement 13 so angesteuert, dass die zweite Dosierkammer (die nun vollgefüllt ist mit Bohnen) von dem zweiten Bohnenbehälter 13 entkoppelt wird, so dass keine Bohnen mehr nachrutschen können.

Daraufhin wird mit Hilfe des Elektromotors 19 der gleichzeitig die Austragsmittel 22 bildende zweite Wandabschnitt 21 so verstellt, dass das Dosierkammervolumen nach unten, d.h. in Richtung Mahlwerk freigegeben wird, so dass das gesamte Bohnenvolumen 23, hier ausschließlich gravitativ zur Mahleinheit (gezeigt in Fig. 1) fallen kann und dort, vorzugsweise in seiner Gesamtheit, vermahlen wird.

Nachdem das Bohnenvolumen 23 die zweite Dosierkammer 17 verlassen hat, werden die Austragsmittel 22, in dem gezeigten Ausführungsbeispiel der zweite Wandabschnitt 21 wieder in die Verschlussposition überführt, in welcher die zweite Dosierkammer verschlossen ist.

Soll nicht die Kaffeesorte aus dem zweiten Bohnenbehälter 3 vermahlen werden, sondern diejenige aus dem ersten Bohnebehälter 2, kann das beispielhaft anhand der vorhergehenden Figuren dargelegte Verfahren analog mit der ersten Dosierkammer bzw. dem ersten Verschlusselement und dem ersten Wandelement 20 durchgeführt werden.

Der Mahleinheit 6, ist wie erwähnt, der Mahlwerksmotor 7 zugeordnet, welcher bevorzugt so lange betrieben wird, bis das gesamte Bohnenvolumen 23 vermahlen wird. Hierzu sind dem Mahlwerksmotor 7 bevorzugt Steuermittel zugeordnet (nicht dargestellt), die den Mahlwerksmotor so lange betreiben, bis sichergestellt ist, dass (erfahrungsgemäß) das gesamte Bohnenvolumen vermahlen ist.

Ganz besonders bevorzugt sind den Steuermitteln jedoch Sensormittel zugeordnet, die einen Motorparameter, beispielsweise den Motorstrom überwachen, wobei ein Absinken des Motorstroms als Signal für ein vollständiges Vermahlen herangezogen werden und in der Folge die Steuermittel dann den Mahlwerksmotor 7 abschalten.

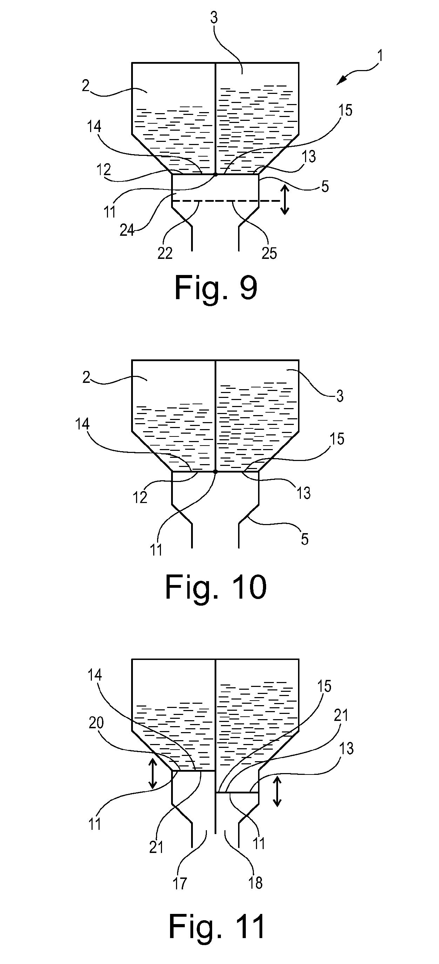

Anhand von Fig. 9 wird ein möglicher alternativer Aufbau eines Kaffeeautomaten erläutert, wobei zur Vermeidung von Wiederholungen im Wesentlichen nur auf die Unterschiede zu dem voranstehenden Ausführungsbeispiel eingegangen wird. Im Hinblick auf die Gemeinsamkeiten wird auf das vorstehende Ausführungsbeispiel verwiesen. Aus Übersichtlichkeitsgründen wurde auf die Darstellung des Mahlwerkes und der Brüheinheit verpflichtet.

Zu erkennen ist, dass wiederum zwei Bohnenbehälter 2, 3 vorgesehen sind, die mit bevorzugten unterschiedlichen Kaffeesorten befüllt sind. Den Bohnenbehältern 2, 3 sind auch hier Verschlussmittel 11 zugeordnet, die ein erstes und ein zweites Verschlusselement 12, 13 umfassen, die bevorzugt wie bei dem vorstehenden Ausführungsbeispiel in einer gekoppelten Bewegung mittels eines gemeinsamen Motors verstellbar sind. Alternativ ist jedem Verschlusselement 12, 13 ein separater Motor zugeordnet.

Im Unterschied zu dem vorstehenden Ausführungsbeispiel umfasst das Ausführungsbeispiel gemäß Fig. 9 eine einzige von dem Förderschacht 5 begrenzte Dosierkammer 24; mit anderen Worten ist den Bohnenbehältern 2, 3 eine gemeinsame Dosierkammer 24 zugeordnet, die mit Hilfe eines gemeinsamen Wandabschnittes volumenveränderlich ist. Der gemeinsame Wandabschnitt 25 kann entlang der Hochachse des Förderschachtes 5 zwischen unterschiedlichen Eintragspositionen verstellt werden. Da beide Auslässe 14, 15 in die gemeinsame Dosierkammer 24 münden, kann auf separate Dosierkammern verzichtet werden. In dem gezeigten Ausführungsbeispiel bildet der gemeinsame verstellbare Wandabschnitt 25 gleichzeitig die Austragsmittel 22 zum Entleeren der Dosierkammer 24.

Eine weitere alternative Ausführungsform zeigt Fig. 10, die auch die einfachste Dosierungsform genannt werden kann. Dieses Ausführungsbeispiel kommt ohne volumenveränderliche Dosierkammer aus. Beide Auslässe 14, 15 münden in den (gemeinsamen) Förderschacht 5, wobei selbstverständlich auch separate Förderschächte vorgesehen sein können.

Jeder Auslass 14, 15 ist mit einem Verschlusselement 12, 13 verschließbar. Nach Öffnen eines der Verschlusselemente 12, 13 füllt sich der Förderschacht 5 auf, wobei das Bohnenvolumen dadurch vorbestimmt sein kann, dass es dem gesamten maximal befüllbaren Volumen entspricht. Alternativ können die Auslässe 14, 15 zeitgesteuert, d.h. für eine bestimmte Zeitspanne geöffnet werden, wobei das Bohnenvolumen dann durch diese Zeitspanne vorbestimmt ist. Auch ist es denkbar ein vorbestimmtes Bohnenvolumen bzw. ein Erreichen des vorbestimmten Bohnenvolumens zu detektieren und daraufhin die Auslässe 14, 15 zu verschließen.

Bevorzugt ist das Volumen des gemeinsamen Förderschachtes (oder im Falle des Vorsehens separater Förderschächte das jeweilige Volumen) so ausgelegt, dass es einem Mindestkaffeevolumen entspricht. Wählt der Nutzer den (maschinenspezifisch vorgesehenen) schwächstmöglichen Kaffee an, werden die Verschlussmittel so angesteuert, dass diese nach vollständigem Befüllen des oder Förderschachtes die Auslässe bzw. den oder die zuvor geöffneten Auslass bzw. Auslässe verschließen und das Mahlwerk daraufhin den gesamten Förderschacht leer mahlt. Wird ein stärkerer Kaffee benötigt, so wird von den Steuermitteln (in Kenntnis des Mahlvolumens pro Zeiteinheit oder Umdrehungszahl) berechnet, wie lange mindestens einer der Auslässe nach Beginn des Mahlvorgangs noch geöffnet bleiben, oder alternativ nach einem vorherigen Verschließen wieder geöffnet werden muss um das gewünschte Bohnenvolumen nachzudosieren, bevor dann der Auslass wieder durch eine entsprechende Ansteuerung des mindestens einen Antriebs der Verschlussmittel geschlossen wird.

Selbst für den einfachsten Fall, dass auf jegliche Detektion verzichtet wird, kann durch das in Fig. 10 gezeigte Ausführungsbeispiel der Status Quo wesentlich verbessert werden, da die Verschlussmittel 11 so angesteuert werden, dass sämtliche Auslässe 14, 15 nach Erreichen des vorbestimmten Füllvolumens, welches im einfachsten Fall dem maximalen Füllvolumen entspricht, verschlossen werden, beispielsweise vor Beginn des Mahlvorgangs, um somit zu verhindern, dass Bohnen aus den Bohnebehältern 2, 3 nachrutschen. In diesem Fall wird das im Förderschacht 5 befindliche Bohnenvolumen um das vermahlene Volumen reduziert, so dass im Falle einer Restmenge diese in jedem Fall geringer ist als im Stand der Technik und sich somit nach einer reduzierten Anzahl von Mahlvorgängen eine Sortenreinheit einstellt. Wird jedoch das Mahlwerk so lange betrieben, bis dass der Förderschacht (auch eine fakultativ nachdosierte Menge) vermahlen ist, verbleibt kein Rest im Förderschacht.

Fig. 11 zeigt wiederum eine alternative Variante, die auch ohne von den Verschlussmitteln 11 separate Austragsmitteln auskommt. Die Verschlussmittel 11, genauer das erste und das zweite Verstellelement 12, 13 sind in dem gezeigten Ausführungsbeispiel so verstellbar, dass diese das maximal befüllbare Förderschachtvolumen vorgeben. Mit anderen Worten ist das Förderschachtvolumen durch Verstellen der Verstellelemente 12, 13, die gleichzeitig die verstellbaren Wandelemente 20, 21 bilden, veränderlich. Es werden auf diese Weise also eine erste und eine zweite Dosierkammer 17, 18 unterhalb der verstellbaren Wandelemente 20, 21 gebildet, wobei auf zusätzliche Austragsmittel verzichtet werden kann. Nachdem die jeweilige Dosierkammer 17, 18 durch Öffnen des entsprechenden Auslasses 14, 15 gefüllt wurde, kann der entsprechende Auslass durch eine entsprechende Ansteuerung der Verschlussmittel 11 wieder verschlossen werden, vorzugsweise bevor der Mahlvorgang beginnt. In diesem Fall entspricht bevorzugt das Bohnenvolumen dem maximalen Dosierkammervolumen, wobei noch weiter bevorzugt dieses gesamte Bohnenvolumen dann durch eine entsprechende Ansteuerung der Mahleinheit vermahlen wird.

In Analogie zu dem Ausführungsbeispiel gemäß Fig. 9 kann den Bohnenbehältern auch bei dem Ausführungsbeispiel gemäß Fig. 11 eine gemeinsame Dosierkammer zugeordnet werden. Ein im Zusammenhang mit Fig. 10 erläutertes (bevorzugtes) Nachdosieren kann bei allen Ausführungsvarianten realisiert werden.

### Bezugszeichenliste

- 1: Kaffeeautomat
- 2: erster Bohnenbehälter
- 3: zweiter Bohnenbehälter
- 4: Trennwand
- 5: Förderschacht
- 6: Mahleinheit
- 7: Mahlwerksmotor
- 8: Brüheinheit
- 9: Auslass
- 10: Antrieb
- 11: Verschlussmittel
- 12: erstes Verschlusselement
- 13: zweites Verschlusselement
- 14: erster Auslass
- 15: zweiter Auslass
- 16: Steuermittel
- 17: erste Dosierkammer
- 18: zweite Dosierkammer
- 19: Elektromotor
- 20: erster Wandabschnitt
- 21: zweiter Wandabschnitt
- 22: Austragsmittel
- 23: Bohnenvolumen
- 24: begrenzte Dosierkammer
- 25: gemeinsamer Wandabschnitt

## Patentansprüche

1. Kaffeeautomat (1) mit
einem ersten Bohnenbehälter (2) mit einem ersten Auslass (14) und einem vom ersten Bohnenbehälter (2) getrennt vorgesehenen zweiten Bohnenbehälter (3) mit einem zweiten Auslass (15),
einer zum Mahlen von Bohnen aus dem ersten und dem zweiten Bohnenbehälter (2, 3) ausgebildeten Mahleinheit (6),
einer der Mahleinheit nachgeschalteten Brüheinheit (8) für gemahlene Bohnen,
mindestens einem Förderschacht (5), durch den Bohnen aus dem ersten und/oder zweiten Bohnenbehälter (2, 3) gravitativ zur Mahleinheit (6) gelangen können, und
den Bohnenbehältern (2, 3) zugeordneten Verschlussmitteln (11) zum Verschließen des ersten und zweiten Auslasses (14, 15),
**dadurch gekennzeichnet,**
**dass** den Verschlussmitteln (11) mindestens ein Antrieb (10) insbesondere ein Elektromotor (19), zum automatischen Betätigen derselben zugeordnet ist, der mit Hilfe von Steuermitteln (16) derart ansteuerbar ist, dass die Verschlussmittel (11) nach Dosieren eines vorbestimmten und/oder vorbestimmbaren Bohnenvolumens (23) den ersten und/oder den zweiten Auslass (14, 15) verschließen.

2. Kaffeeautomat nach Anspruch 1,
**dadurch gekennzeichnet,**
**dass** die Steuermittel (16) den mindestens einen Antrieb (10) derart ansteuernd ausgebildet sind, dass der erste und/oder der zweite Auslass (14, 15), insbesondere nach vollständigem Auffüllen des Förderschachtes (5, 17, 18), nach Beginn des Mahlvorgangs, insbesondere während des Mahlvorgangs, für eine, vorzugsweise vorbestimmte oder vorbestimmbare, Zeitspanne geöffnet bleiben/bleibt oder wieder geöffnet werden/wird, um ein vorbestimmtes und/oder vorbestimmbares Bohnenvolumen zum Erreichen des zu dosierenden Bohnenvolumens nachzudosieren.

3. Kaffeeautomat nach Anspruch 2,
**dadurch gekennzeichnet,**
**dass** die Steuermittel (16) die Zeitspanne in Abhängigkeit der von einem Benutzer ausgewählten Kaffeestärke einstellend ausgebildet sind.

4. Kaffeeautomat nach einem der Ansprüche 2 oder 3,
**dadurch gekennzeichnet,**
**dass** die Steuermittel (16) den mindestens einen Antrieb (10) zum Schließen des ersten und/oder zweiten Auslasses nach Ablauf einer vorgegebenen und/oder vorgebbaren Mahldauer des Mahlwerks und/oder nach Erreichen einer vorgegeben und/oder vorgebbaren Anzahl an Mahleinheits- oder Mahleinheitsmotorumdrehungen ansteuernd ausgebildet sind.

5. Kaffeeautomat nach einem der vorhergehenden Ansprüche,
**dadurch gekennzeichnet,**
**dass** signalleitend mit den Steuermitten (16) verbundene Messmittel zum Bestimmen des Ist-Volumens und/oder des Ist-Gewichtes des mittels der Mahleinheit gemahlenen Kaffeemehls, insbesondere einer Brühkammerfüllmenge, vorgesehen sind und dass die Steuermittel den mindestens einen Antrieb in Abhängigkeit eines Vergleichs des Ist-Volumens und/oder des Ist-Gewichtes mit einem, insbesondere in einem Speicher hinterlegten oder dynamisch berechneten, in einem Speicher hinterlegen, vorzugsweise einstellbaren, Soll-Volumen und/oder Soll-Gewichtes ansteuernd ausgebildet sind, derart, dass bei einem nachfolgenden Dosiervorgang die Differenz zwischen Istwert und Sollwert verringert wird, insbesondere durch Anpassen der Öffnungszeit, insbesondere der Nachdosierzeitspanne.

6. Kaffeeautomat nach einem der vorhergehenden Ansprüche,
**dadurch gekennzeichnet,**
**dass** mit den Steuermitteln (16) verbundene, beispielsweise optische oder mechanische, Detektionsmittel zum Detektieren des Erreichens des Bohnenvolumens (23) und/oder Zeitmessmittel vorgesehen ist, mit denen das Bohnenvolumen (23) durch Zeitvorgabe bestimmbar ist.

7. Kaffeeautomat nach einem der vorhergehenden Ansprüche,
**dadurch gekennzeichnet,**
**dass** von dem Förderschacht (5) mindestens eine volumenveränderliche Dosierkammer (17, 18) zur Aufnahme des Bohnenvolumens (23) begrenzt ist, und dass das Bohnenvolumen (23) durch einen der Dosierkammer (17, 18) zugeordneten, in unterschiedliche Eintragspositionen bewegbaren Wandabschnitt (20 ,21) einstellbar und/oder vorbestimmbar ist.

8. Kaffeeautomat nach Anspruch 7,
**dadurch gekennzeichnet,**
**dass** der Dosierkammer (17, 18), vorzugsweise zumindest abschnittsweise von dem bewegbaren Wandabschnitt (20, 21) gebildete, bevorzugt motorisch antreibbare, Austragsmittel (22) zum Entleeren der Dosierkammer (17, 18) zur Mahleinheit (6) zugeordnet sind.

9. Kaffeeautomat nach Anspruch 8,
**dadurch gekennzeichnet,**
**dass** der bewegbare Wandabschnitt (20, 21, 25) zur Einstellung des Dosierkammervolumens von den Verschlussmitteln (11) gebildet ist.

10. Kaffeeautomat nach einem der Ansprüche 7 bis 9 ,
**dadurch gekennzeichnet,**
**dass** die Dosierkammer (17, 18) oberhalb der Mahleinheit (6) angeordnet ist, und dass vorzugsweise die Austragsmittel (22) die Dosierkammer (17, 18) in Richtung Mahleinheit (6) begrenzen.

11. Kaffeeautomat nach einem der Ansprüche 7 bis 10,
**dadurch gekennzeichnet,**
**dass** die unterschiedlichen Eintragspositionen entlang einer Förderschachthochachse angeordnet sind.

12. Kaffeeautomat nach einem der Ansprüche 7 bis 11,
**dadurch gekennzeichnet,**
**dass** die Eintragspositionen manuell und/oder automatisch auswählbar sind, insbesondere abhängig von einer Kaffeesorte und/oder Kaffee-Portionsmenge, und/oder dass die Eintragspositionen für Füllgut des ersten und zweiten Bohnenbehälters (2, 3) unterschiedlich sind.

13. Kaffeeautomat nach einem der vorhergehenden Ansprüche,
**dadurch gekennzeichnet,**
**dass** die Verschlussmittel (11) ein erstes Verschlusselement (12) zum Verschließen des ersten Auslasses (14) und ein zweites Verschlusselement (12, 13) zum Verschließen des zweiten Auslasses (15) aufweisen, und dass den beiden Verschlusselementen (12, 13) ein gemeinsamer Antrieb zugeordnet ist, mit denen die Verschlussmittel (11) in einer mechanisch gekoppelten Bewegung verstellbar sind, oder dass jedem Auslass (14, 15) ein eigner Antrieb zugeordnet ist.

14. Kaffeeautomat nach einem der vorhergehenden Ansprüche,
**gekennzeichnet durch**
der Mahleinheit (6) zugeordnete Ansteuermittel zum Ansteuern der Mahleinheit (6) in einem Mahlbetrieb, der das vollständige Vermahlen des Bohnenvolumens (23) und **dadurch** Leeren des Förderschaftes (5), insbesondere der Dosierkammer (17, 18), und/oder der Mahleinheit (6) bewirkt, insbesondere **durch** Erfassen eines Motorparameters der Mahleinheit (6) und/oder vorgeben einer Mindestmahldauer.

15. Verfahren zum Einbringen einer Bohnenmenge aus einer Mehrzahl von Bohnenbehältern (2, 3) in eine gemeinsame Mahleinheit (6), insbesondere Verfahren zum Betreiben eines Kaffeeautomaten (1) nach einem der vorhergehenden Ansprüche, mit den Schritten:
Gravitatives Füllen mindestens eines Förderschachtes (5) mit einem Bohnenvolumen (23) aus einem ersten und/oder einem zweiten Bohnenbehälter (2, 3) durch einen ersten bzw. zweiten Auslass (14, 15), Mahlen, zumindest einer Teilmenge, des Bohnenvolumens (23),
**dadurch gekennzeichnet,**
**dass** der erste und/oder zweite Auslass (14, 15) nach Dosieren eines vorbestimmten und/oder vorbestimmbaren Bohnenvolumen (23) automatisch, insbesondere elektromotorisch, angetrieben verschlossen wird/werden.
